# EUROPEAN PATENT APPLICATION

(11) **EP 2 587 007 A2**
(43) Date of publication of application: **01.05.2013**
(21) Application number: 12189923.1
(22) Date of filing: 25.10.2012
(51) Int. Cl.: F01K 23/10

(54) **System and method for operating heat recovery steam generators**

(30) Priority: 26.10.2011 US 201113282226
(71) Applicant: General Electric Company, Schenectady, NY 12345 (US)
(72) Inventor: Nenmeni, Vijay Anand Raghavendran, Atlanta, GA Georgia 30339 (US); Srivastava, Ajit, Atlanta, GA Georgia 30339 (US); Chriswindarto, Wulang Edwien, Atlanta, GA Georgia 30339 (US); Swanson, Larry William, Irvine, CA California 92618 (US)
(74) Representative: Williams, Andrew Richard

(57) **Abstract**

A system includes a heat recovery steam generator (HRSG), a waste heat exchanger coupled to the HRSG and configured to transfer heat from the HRSG to a purge stream to generate a heated purge stream, and a heated purge stream path configured to transfer the heated purge stream from the waste heat exchanger to an inlet of the HRSG.

## Description

### BACKGROUND OF THE INVENTION

The subject matter disclosed herein relates to operating heat exchangers, and more particularly, to systems and methods for operating heat recovery steam generators.

Heat exchangers are used to transfer heat from one medium to another in a variety of industries. A heat recovery steam generator (HRSG) is an example of a heat exchanger and may be used in combined cycle power plants and similar plants. The HRSG may transfer heat energy from an exhaust of a gas turbine engine to convert water into steam. As such, the HRSG may operate at very high temperatures during normal operation. However, during startups, shutdowns, or operational upsets, the HRSG may be purged with a gas at a much lower temperature. For example, ambient air may be used to purge the HRSG when not in operation. Unfortunately, purging the HRSG with such relatively low temperature gases may cause certain components of the HRSG to undergo rapid cooling, thereby potentially reducing the life of the components because of the stresses caused by the rapid cooling.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a heat recovery steam generator (HRSG), a waste heat exchanger coupled to the HRSG and configured to transfer heat from the HRSG to a purge stream to generate a heated purge stream, and a heated purge stream path configured to transfer the heated purge stream from the waste heat exchanger to an inlet of the HRSG.

In a second embodiment, a system includes a heat recovery steam generator (HRSG) and a blower coupled to the HRSG and configured to transfer a purge stream to a waste heat exchanger disposed in the HRSG. The waste heat exchanger is configured to transfer heat from the HRSG to the purge stream to generate a heated purge stream. The system also includes a heated purge stream path configured to transfer the heated purge stream from the waste heat exchanger to an inlet of the HRSG and a controller configured to adjust a flow rate of the heated purge stream in response to feedback from a sensor disposed in the HRSG.

In a third embodiment, a method includes flowing a purge stream through a waste heat exchanger coupled to a heat recovery steam generator (HRSG), transferring heat from the HRSG to the purge stream in the waste heat exchanger to generate a heated purge stream, flowing the heated purge stream to an inlet of the HRSG via a heated purge stream flow path, and purging the HRSG with the heated purge stream.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of an HRSG used in a combined cycle power plant;
FIG. 2 is a block diagram of an embodiment of an HRSG that includes a waste heat exchanger in the HRSG;
FIG. 3 is a graph of temperature as a function of purge time within an embodiment of an HRSG;
FIG. 4 is a block diagram of an embodiment of an HRSG with an induced draft fan;
FIG. 5 is a block diagram of an embodiment of an HRSG with an induced draft fan that includes an induced draft stack coupled to an exhaust stack of the HRSG;
FIG. 6 is a block diagram of an embodiment of an HRSG with an inlet stack; and
FIG. 7 is a graph of temperature as a function of position within an embodiment of an
HRSG.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments provide systems and methods for operating an HRSG. For example, a system may include an HRSG and a waste heat exchanger coupled to the HRSG. The waste heat exchanger may transfer heat from the HRSG to a purge stream flowing through the waste heat exchanger to generate a heated purge stream. The system may also include a heated purge stream path that transfers the heated purge stream from the waste heat exchanger to an inlet of the HRSG. The heated purge stream may then be used to purge the HRSG. For example, after a shutdown of the HRSG, residual combustible gases in the HRSG may be purged from the HRSG with the heated purge stream prior to restarting the HRSG. Examples of shutdowns of the HRSG include, but are not limited to, maintenance events, forced cooling events, and water wash events. A forced cooling event refers to rapidly cooling the HRSG for certain maintenance activities. A water wash event refers to water washing the gas turbine inlet. Using a non-combustible gas, such as air, to purge the HRSG may result in the HRSG being essentially free of combustible gases, which may be a suitable condition for maintenance, startup, or restart. In certain embodiments, the system may also include a blower coupled to the HRSG that transfers the purge stream to the waste heat exchanger to be heated. In particular embodiments, the blower may use ambient air as the purge stream. In further embodiments, the system may include a controller that adjusts a flow rate of the heated purge stream in response to feedback from a sensor disposed in the HRSG. For example, the sensor may sense a combustible gas level, and the controller may flow the heated purge stream through the HRSG until the detected combustible gas level is below a threshold.

Using the waste heat exchanger to purge the HRSG may offer several advantages compared to other methods of purging the HRSG. For example, a temperature of the heated purge stream may be closer to a temperature of the HRSG because heat from the HRSG is used to generate the heated purge stream. Thus, by using the heated purge stream from the waste heat exchanger to purge the HRSG, quenching, which refers to rapid cooling, of the hot components of the HRSG may be avoided. Minimizing quenching of the components of the HRSG may improve or lengthen the life of the components because the components undergo less stress and strain caused by thermal expansion and contraction. In addition, use of the heated purge stream to purge the HRSG may reduce the amount of steam that condenses inside the HRSG, which may occur when an ambient purge stream of air is used for purging. Condensate may have higher heat transfer rates than steam, thereby creating higher stresses within the HRSG. Further, it may be desirable to maintain the HRSG at a high temperature to reduce the startup time. Thus, purging with the heated purge stream may offer several advantages, such as reducing startup time and/or stresses within the HRSG. By extending the life of the components of the HRSG, the costs and downtime associated with replacing and/or repairing the components may be avoided. In addition, the operating efficiency of the HRSG may be improved by using the heated purge stream to purge the HRSG.

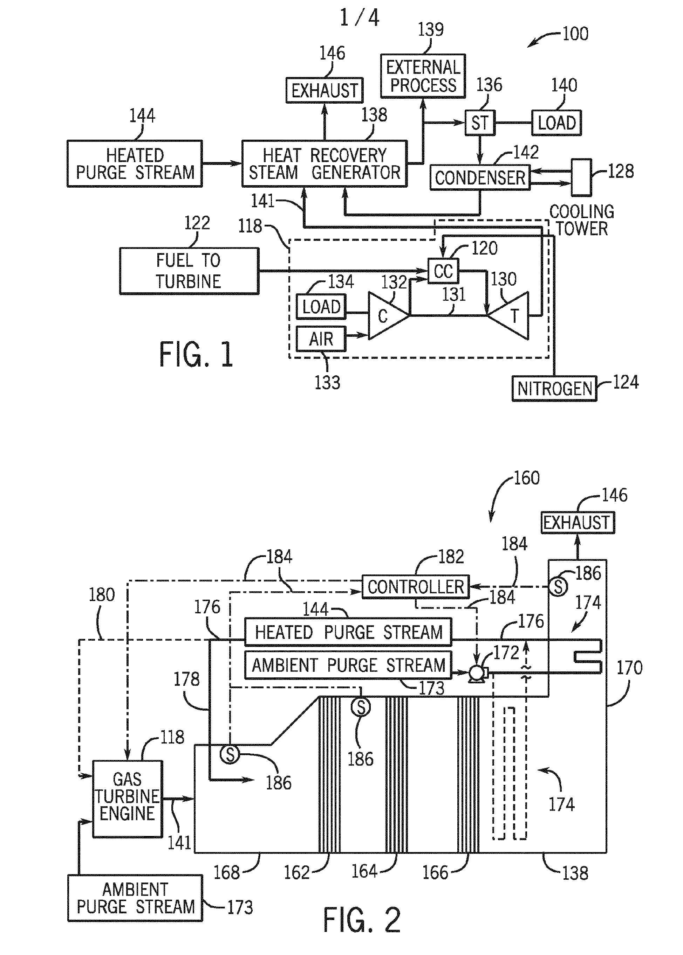

FIG. 1 is a block diagram of an embodiment of a portion of a combined cycle power plant 100 that may produce and bum a synthetic gas, i.e., syngas, or other fluids (i.e., gases or liquids), such as, but not limited to, natural gas, liquid fuel, or any similar fluid that may be utilized for combustion purposes. Examples of power plants 100 include, but are not limited to, power stations, cogeneration plants, combined heat and power (CHP) plants, and so forth. As discussed in detail below, a heated purge stream 144 may be used for purging the HRSG. The heated purge stream 144 may be heated using a variety of heat sources in the power plant 100, such as the HRSG. The heated purge stream 144 may include, but is not limited to, air, oxygen, nitrogen, or any combination thereof. In other portions of the power plant 100 not shown in FIG. 1, a fuel may be combusted to produce a syngas, e.g., a combination of carbon monoxide, hydrogen, and other constituents. The syngas may be termed untreated syngas, because it includes, for example, H₂S. The untreated syngas may be treated to produce a treated syngas 122, which has undergone the removal of its sulfur containing components and a large fraction of its carbon dioxide. The treated syngas 122 may be then transmitted to a combustor 120, e.g., a combustion chamber, of a gas turbine engine 118 as combustible fuel. In other embodiments, the treated syngas 122 may be referred to more generically as a fuel to the turbine engine 118, as shown in FIG. 1. A compressor or other source of nitrogen may be used to transmit compressed nitrogen 124 to the combustor 120 of the gas turbine engine 118. The nitrogen 124 may be used as a diluent to facilitate control of emissions, for example. The gas turbine engine 118 may include a turbine 130, a drive shaft 131, and a compressor 132, as well as the combustor 120. The combustor 120 may receive fuel, such as the treated syngas 122, which may be injected under pressure from fuel nozzles. This fuel may be mixed with compressed air as well as compressed nitrogen 124, and combusted within combustor 120. This combustion may create hot pressurized exhaust gases.

The combustor 120 may direct the exhaust gases towards an exhaust outlet of the turbine 130. As the exhaust gases from the combustor 120 pass through the turbine 130, the exhaust gases force turbine blades in the turbine 130 to rotate the drive shaft 131 along an axis of the gas turbine engine 118. As illustrated, the drive shaft 131 is connected to various components of the gas turbine engine 118, including the compressor 132. The drive shaft 131 may connect the turbine 130 to the compressor 132 to form a rotor. The compressor 132 may include blades coupled to the drive shaft 131. Thus, rotation of turbine blades in the turbine 130 may cause the drive shaft 131 connecting the turbine 130 to the compressor 132 to rotate blades within the compressor 132. This rotation of blades in the compressor 132 causes the compressor 132 to compress air 133 received via an air intake in the compressor 132. The compressed air may then be fed to the combustor 120 and mixed with fuel and compressed nitrogen 124 to allow for higher efficiency combustion. The drive shaft 131 may also be connected to a load 134, which may be a stationary load, such as an electrical generator for producing electrical power, for example, in a power plant. Indeed, the load 134 may be any suitable device that is powered by the rotational output of the gas turbine engine 118.

The power plant 100 also may include a steam turbine engine 136 and a heat recovery steam generation (HRSG) system 138. The steam turbine engine 136 may drive a second load 140. The second load 140 may also be an electrical generator for generating electrical power. However, both the first 134 and second 140 loads may be other types of loads capable of being driven by the gas turbine engine 118 and steam turbine engine 136. In addition, although the gas turbine engine 118 and steam turbine engine 136 may drive separate loads 134 and 140, as shown in the illustrated embodiment, the gas turbine engine 118 and steam turbine engine 136 may also be utilized in tandem to drive a single load via a single shaft. The specific configuration of the steam turbine engine 136, as well as the gas turbine engine 118, may be implementation-specific and may include any combination of sections.

Heated exhaust gas 141 from the gas turbine engine 118 may be transported into the HRSG 138 and used to heat water and produce steam used to power the steam turbine engine 136. In other embodiments, the steam may be used by an external process 139, such as, but not limited to, a CHP plant, a chemical plant, a refinery, a district heating system, or any other type of steam consumer or system that uses steam. After the heated exhaust gas 141 passes through the HRSG 138, it may be discharged to the atmosphere as exhaust 146. In certain embodiments, the exhaust 146 may be treated to comply with emissions control regulations prior to discharge. In addition, exhaust from, for example, a low-pressure section of the steam turbine engine 136 may be directed into a condenser 142. The condenser 142 may utilize a cooling tower 128 to exchange heated water for chilled water. The cooling tower 128 acts to provide cool water to the condenser 142 to aid in condensing the steam transmitted to the condenser 142 from the steam turbine engine 136. Condensate from the condenser 142 may, in turn, be directed into the HRSG 138. Again, exhaust 141 from the gas turbine engine 118 may also be directed into the HRSG 138 to heat the water from the condenser 142 and produce steam.

In combined cycle systems, such as the power plant 100, hot exhaust 141 may flow from the gas turbine engine 118 and pass to the HRSG 138, where it may be used to generate high-pressure, high-temperature steam. The steam produced by the HRSG 138 may then be passed through the steam turbine engine 136 for power generation. In addition, the produced steam may also be supplied to any other processes where steam may be used, such as to a gasifier used to combust the fuel to produce the untreated syngas. The gas turbine engine 118 generation cycle is often referred to as the "topping cycle," whereas the steam turbine engine 136 generation cycle is often referred to as the "bottoming cycle." Combining these two cycles may lead to greater efficiencies in both cycles. In particular, exhaust heat from the topping cycle may be captured and used to generate steam for use in the bottoming cycle.

FIG. 2 is a block diagram of an embodiment of a system 160 that includes the HRSG 138. As shown in FIG. 2, the HRSG 138 includes a high-pressure section 162, an intermediate-pressure section 164, and a low-pressure section 166. The high-pressure section 162 generates high-pressure steam, the intermediate-pressure section 164 generates intermediate-pressure steam, and the low-pressure section 166 generates low-pressure steam. The high-pressure section 162 is located near an inlet section 168 of the HRSG 138. As the temperature of heated exhaust gas 141 from the gas turbine engine 118 may be highest near the high-pressure section 162, the high-pressure section 162 generates high-pressure steam. In other words, the high temperature of the heated exhaust gas 141 near the high-pressure section 162 provides sufficient heat to produce the high-pressure steam. As shown in FIG. 1, the heated exhaust gas 141 from the gas turbine engine 118 enters the HRSG 138 in the inlet section 168. After the heated exhaust gas 141 passes through the high-pressure section 162, the intermediate-pressure section 164, and the low-pressure section 166, the heated exhaust gas 141 exits from the HRSG 138 from an HRSG stack 170. Thus, the exhaust 146 may exit from the HRSG stack 170 into the atmosphere. In other embodiments, the intermediate-pressure section 164 may be omitted or the HRSG 138 may be configured as a single-pressure system.

In certain embodiments, a blower 172 may be used to transfer an ambient purge stream 173 into a waste heat exchanger 174. The ambient purge stream 173 may be at a temperature corresponding to a temperature of the surroundings of the power plant 100. In other embodiments, the ambient purge stream 173 may be at a temperature above ambient, but less than a temperature of the HRSG 138 or other source of heat. As discussed above, in further embodiments, the ambient purge stream 173 may include air 133, oxygen, nitrogen, or any combination thereof. In certain embodiments, the waste heat exchanger 174 may be disposed in the HRSG stack 170. In other embodiments, the waste heat exchanger 174 may be disposed downstream of the low-pressure section 166, as indicated by the dashed lines in FIG. 2. In further embodiments, the waste heat exchanger 174 may be disposed anywhere in the HRSG 138 such that heat from the HRSG 138 may be transferred to the ambient purge stream 173 flowing through the waste heat exchanger 174. In yet further embodiments, the waste heat exchanger 174 may be disposed anywhere else in the power plant 100 where heat is available for heating the ambient purge stream 173. The waste heat exchanger 174 may be a shell and tube heat exchanger, a plate heat exchanger, a plate fin heat exchanger, or any other type of heat exchanger. The waste heat exchanger 174 transfers heat from the HRSG 138 to the ambient purge stream 173 to generate the heated purge stream 144, which may be transferred from the waste heat exchanger 174 using a heated purge stream path 176. In certain embodiments, a first portion 178 of the heated purge stream path 176 may transfer the heated purge stream 144 to the inlet section 168. The heated purge stream 144 may then be used to purge the HRSG 138 of combustible gases and/or products of combustion, as described in detail below. In other embodiments, a second portion 180 of the heated purge stream path 176, as indicated by the dashed lines in FIG. 2, may transfer the heated purge stream 144 to the gas turbine engine 118, which then transfers the heated purge stream 144 to the inlet section 168. When transferring the heated purge stream 144 using the gas turbine engine 118, the gas turbine engine 118 may be operated without firing the gas turbine engine 118. Instead, a driver or motor, such as a load commutated inverter (LCI), may be used to rotate the gas turbine engine 118, thereby operating the gas turbine engine 118 as a fan. Thus, the gas turbine engine 118 is used to transfer the heated purge stream 144 through the HRSG 138 without producing any combustible gases and/or products of combustion. Throughout the following discussion, when reference is made to the gas turbine engine 118 being run or operated for purging, the LCI or other device is used to turn the gas turbine engine 118 without firing the gas turbine engine 118. In certain embodiments, the ambient purge stream 173 may be mixed with the heated purge stream 144 and both gases transferred to the HRSG 138 using the gas turbine engine 118. Typically, only one of the first and second portions 178 and 180 may be used at the same time. In addition, one advantage of using the first portion 178 compared to using the second portion 180 is that less piping may be used and thus, less heat lost to the environment.

In further embodiments, the waste heat exchanger 174 may be reversibly coupled to the HRSG 138 or HRSG stack 170. In other words, the waste heat exchanger 174 may be configured to be reversibly inserted into the HRSG 138 during purging of the HRSG to generate the heated purge stream 144 and reversibly removed from the HRSG 138 when purging is not used, for example, during normal operation of the HRSG 138. Thus, the waste heat exchanger 174 may be removable or retractable. By removing the waste heat exchanger 174 from the HRSG 138 during normal operation, any pressure drop or restriction associated with the waste heat exchanger 174 to the flow of heated exhaust gas 141 through the HRSG 138 may be avoided. In other embodiments, the waste heat exchanger 174 may not be configured to be removable, but any pressure drop associated with the waste heat exchanger 174 may be minimal.

In further embodiments, the heated purge stream 144 generated by the waste heat exchanger 174 may include any heated fluid (e.g., gases or liquids). For example, the waste heat exchanger 174 may heat water used for water washing certain components of the system 160, such as the gas turbine engine 118. By using heated water, reduction of the temperature of the gas turbine engine 118 may be minimized. Accordingly, quenching effects in the HRSG 138 may also be reduced by starting up the gas turbine engine 118 at higher temperatures. Using heated water for washing purposes may be especially desirable when the ambient temperature of water is low.

In certain embodiments, the system 160 may include a controller 182, which may be used to control certain aspects of the system 160. For example, the controller 182 may receive signals 184 from one or more sensors 186 disposed in the HRSG 138. In certain embodiments, the sensors 186 may be disposed in the inlet section 168, adjacent to one or more of the high-pressure section 162, intermediate-pressure section 164, or low-pressure section 166, or in the HRSG stack 170. The sensors 186 may sense a level of combustible gas, a level of oxygen, a temperature, or any combination thereof. The controller 182 may use the information received from the sensors 186 to generate signals 184 sent to one or more components of the system 160. Specifically, the controller 182 may send a signal 184 to the gas turbine engine 118 or the blower 172. For example, when the HRSG 138 is shut down for maintenance or other reasons, the heated exhaust gas 141 may be purged from the HRSG 138 because the gas 141 includes combustible gases, products of combustion, and other gases that may be undesirable for maintenance or operating personnel. The blower 172 and/or gas turbine engine 118 may be used to transfer the heated purge stream 144 through the HRSG 138 to purge any combustible gases and/or products of combustion. Typically, several volumes, or exchanges, of air may be used to reduce a level of combustible gases and/or products of combustion in the HRSG 138 below an acceptable threshold for personnel. During purging of the HRSG 138, the controller 182 may receive a signal 184 indicating a high level of combustible gases and/or products of combustion in the HRSG 138. The controller 182 may send a signal 184 to the gas turbine engine 118 or the blower 172 to increase its speed to accelerate the rate of purging of the HRSG 138. Similarly, the controller 182 may continue purging the HRSG 138 until a minimum threshold of oxygen is reached. Further, the controller 182 may receive a signal 184 indicating a temperature below a threshold in the inlet section 168. The controller 182 may send a signal 184 to the gas turbine engine 118 or the blower 172 to adjust a flow rate of the heated purge stream 144 to help maintain the temperature of the inlet section 168.

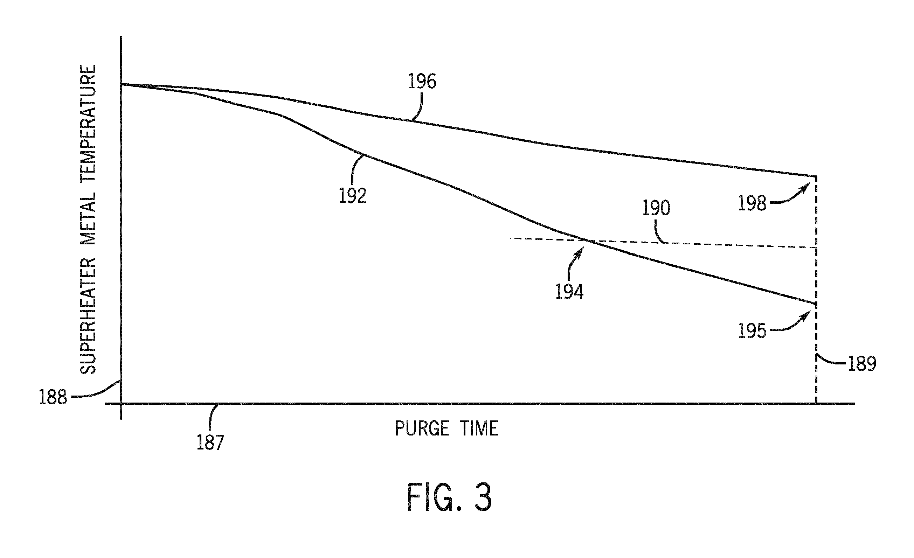

FIG. 3 is a graph of temperature as a function of purge time within the system 160. Specifically, an x-axis 187 represents the amount of time elapsed during the purge of the system 160, and a y-axis 188 represents a temperature of the metal of a superheater of the HRSG 138. In certain embodiments, the superheater may be located in the high-pressure section 162, intermediate-pressure section 164, low-pressure section 166, or any other section of the HRSG 138. The superheater may be configured to generate superheated steam using heat from the heated exhaust gas 141 flowing through the HRSG 138 during normal operation. A purge completion line 189 represents the end of the purge, e.g., when the combustible gas level within the HRSG 138 is below a threshold. A steam condensation line 190 represents the temperature at which steam may condense in the superheater of the HRSG 138. In other words, operation of the HRSG 138 below the steam condensation line 194 may result in the formation of liquid condensate, which may be undesirable. A first curve 192 represents the change in temperature of the superheater when the waste heat exchanger 174 is not used, i.e., purging the HRSG 138 using the ambient purge stream 173. As shown in FIG. 3, the superheater metal temperature gradually decreases as the purge continues until the first curve 192 intersects the steam condensation temperature 190 at a point 194. As the purge of the HRSG 138 using the ambient purge stream 173 continues, the superheater metal temperature falls below the steam condensation temperature 190, which may cause the formation of condensate within the superheater. The presence of condensate in the superheater may result in the development of high stress and strain within the HRSG 138. The purge of the HRSG 138 using the ambient purge stream 173 is complete where the first curve 192 intersects the purge completion line 189 at a point 195.

In contrast, a second curve 196 of FIG. 3 represents the change in temperature of the superheater metal when the waste heat exchanger 174 is used, i.e., purging the HRSG 138 using the heated purge stream 144, as described above. As shown in FIG. 3, the superheater metal temperature gradually decreases as the purge with the heater purge stream 144 continues, until a point 198 is reached where the second curve 196 intersects the purge completion line 189 above the steam condensation temperature 190. Thus, when the waste heat exchanger 174 is used to purge the HRSG 138 with the heated purge stream 144, no condensate may be formed within the superheater, thereby reducing the stress and strain within the HRSG 138 compared to previous methods for purging the HRSG 138, such as with the ambient purge stream 173. As shown in FIG. 3, the overall decrease in the superheater metal temperature using the heated purge stream 144 is less than that using the ambient purge stream 173. In other words, the first and second curves 192 and 196 may begin at the same temperature, but the point 198 of the second curve 196 may be at a temperature greater than the point 195 of the first curve 192. In certain embodiments, the point 198 may be below the steam condensation line 190 when using the heated purge stream 144, but the point 198 may still be at a temperature greater than the point 195. In further embodiments, the controller 182 may adjust the flow rate of the heated purge stream 144 such that a temperature of the heated purge stream 144 downstream of the low-pressure section 166 is greater than the steam condensation temperature.

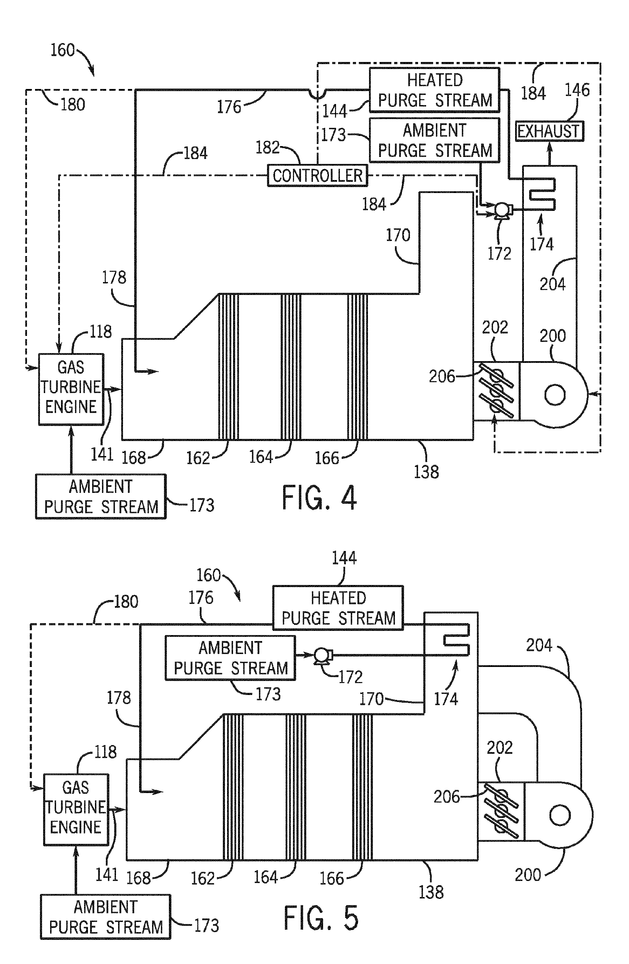

FIG. 4 is a block diagram of an embodiment of the system 160 that includes an induced draft fan 200. Elements in FIG. 4 in common with those shown in FIG. 2 are labeled with the same reference numerals. As shown in FIG. 4, the induced draft fan 200 may be coupled to the HRSG 138 via a duct 202. The induced draft fan 200 may be used to exhaust gases from the HRSG 138. In other words, the induced draft fan 200 helps to pull gases through the HRSG 138 into an induced draft stack 204. Thus, during purging of the HRSG 138, the exhaust 146 exits from the induced draft stack 204 into the atmosphere in the illustrated embodiment. In certain embodiments, an induced draft damper 206 may be disposed in the duct 202 to block or isolate the induced draft fan 200 from the HRSG 138 when not in use. As shown in FIG. 4, the waste heat exchanger 174 may be disposed in the induced draft stack 204. The heated purge stream 144 from the waste heat exchanger 174 may flow through the first portion 178 into the inlet section 168. Alternatively or additionally, the heated purge stream 144 may flow through the second portion 180 to the gas turbine engine 118. However, the gas turbine engine 118 may not be running when the induced draft fan 200 is used. Instead, the heated purge stream 144 flows through the gas turbine engine 118, thereby further heating the heated purge stream 144 using residual heat left in the gas turbine engine 118. By using the induced draft fan 200 to purge the HRSG 138 instead of running the gas turbine engine 118, the life of the gas turbine engine 118 may be extended by reducing the operational time and wear of the gas turbine engine 118. In certain embodiments, the ambient purge stream 173 may be combined with the heated purge stream 144 to purge the HRSG 138. In other embodiments, the controller 182 may send signals to the induced draft damper 206 or the induced draft fan 200, in addition to the blower 172 and the gas turbine engine 118, to control the purging of the HRSG 138.

FIG. 5 is a block diagram of an embodiment of the system 160 that includes a different configuration of the induced draft stack 204. Specifically, the induced draft stack 204 may be coupled to the HRSG stack 170. Thus, the waste heat exchanger 174 may be disposed in either the induced draft stack 204 or the HRSG stack 170. By coupling the induced draft stack 204 to the HRSG stack 170, costs associated with the induced draft stack 204 may be reduced. In addition, fewer modifications may be made to the system 160 to retrofit the induced draft fan 200 and associated equipment. Although not shown, the system 160 of FIG. 5 may also include the controller 182 to control the purging of the HRSG 138. In other respects, the system 160 shown in FIG. 5 is similar to the systems 160 shown in FIGS. 2 and 3.

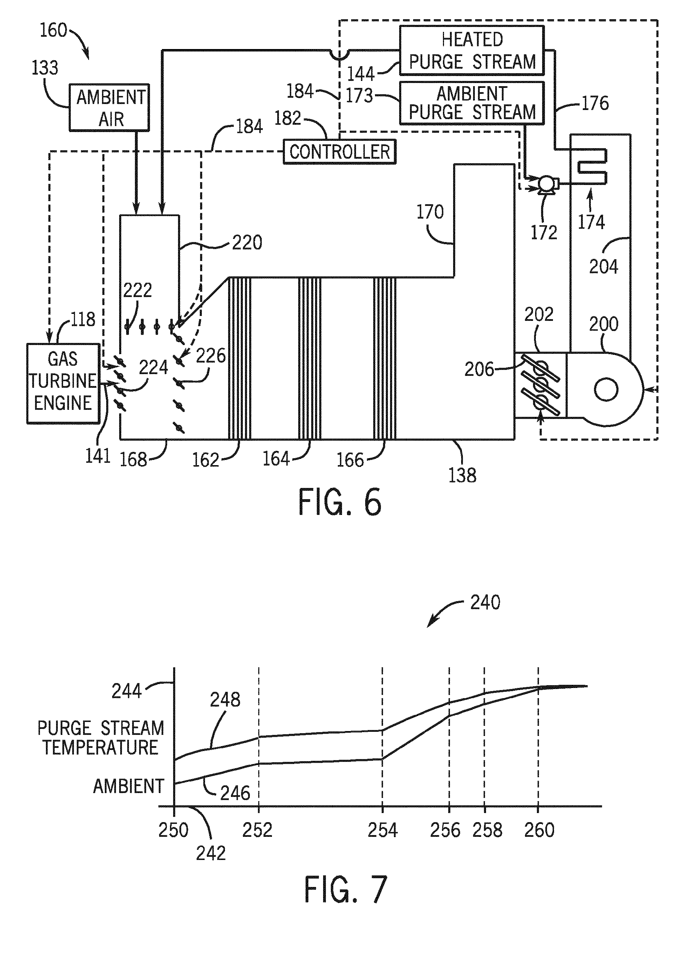

FIG. 6 is a block diagram of an embodiment of the system 160 that includes a bypass stack 220, which may be coupled to the inlet section 168 of the HRSG 138. The bypass stack 220 may be used to transfer the heated exhaust gases 141 from the gas turbine engine 118 to the atmosphere, thereby bypassing the HRSG 138. For example, the HRSG 138 may be shut down for a short period and it may be desirable not to shut down the gas turbine engine 118. When the gas turbine engine 118 is not operating, the bypass stack 220 may be used to purge the HRSG 138. Specifically, the bypass stack 220 may include a first damper 222 to isolate the bypass stack 220. In addition, a second damper 224 may be used to isolate the gas turbine engine 118 and a third damper 226 may be used to isolate the HRSG 138. When the gas turbine engine 118 is running and the HRSG 138 is bypassed, the first damper 222 may be in an open position, the second damper 224 in an open position, and the third damper 226 in a closed position. When the gas turbine engine 118 is not running and the bypass stack 220 is used to purge the HRSG 138, the first damper 222 may be in the open position, the second damper 224 may be in a closed position, and the third damper 226 in an open position. When the bypass stack 220 is not used, the first damper 222 may be in a closed position, the second damper 224 may be in the open position, and the third damper 226 may be in the open position. When the induced draft fan 200 is used to purge the HRSG 138, the first damper 222 may be in the open position, the second damper 224 may be in the closed position, the third damper 226 may be in the open position, and the induced draft damper 206 may be in an open position. When purging the HRSG 138, the heated purge stream 144 from the waste heat exchanger 174 is transferred via the heated purge stream path 176 to the bypass stack 220. In addition, in certain embodiments, the ambient purge stream 173 may be mixed with the heated purge stream 144 transferred to the bypass stack 220. Further, the controller 182 shown in FIG. 6 may send signals 184 to open and close the first damper 222, the second damper 224, or the induced draft damper 206. One advantage of the system 160 shown in FIG. 6 is reducing wear associated with use of the gas turbine engine 118 for purging the HRSG 138. Instead, the induced draft fan 200 may be used for purging the HRSG 138. In addition, maintenance and operational costs associated with the induced draft fan 200 may be less than those for the gas turbine engine 118. Further, the system 160 shown in FIG. 6 enables maintenance or other activity to occur for the gas turbine engine 118 separate from any activity associated with the HRSG 138 through the use of the first and second dampers 222 and 224.

FIG. 7 is a graph of temperature as a function of position within the system 160. Specifically, an x-axis 242 represents positions or points within the system 160, and a y-axis 244 represents a temperature of the purge stream flowing through the system 160 at those points. A first curve 246 represents the change in temperature of the purge stream when the waste heat exchanger 174 is not used, and a second curve 248 represents a temperature profile of the purge stream when the waste heat exchanger 174 is used. In other words, the ambient purge stream 173 may be used to purge the HRSG 138 to generate the first curve 246 and the heated purge stream 144 may be used to generate the second curve 248. A point 250 corresponds to an inlet of the gas turbine engine 118, and a point 252 corresponds to an outlet of the gas turbine engine 118. A point 254 represents a temperature of the inlet section 168, a point 256 represents a temperature between the high-pressure section 162 and the intermediate-pressure section 164, and a point 258 represents a temperature between the intermediate-pressure section 164 and the low-pressure section 166. Finally, a point 260 represents a temperature downstream of the low-pressure section 166. Referring to the first curve 246, the ambient purge stream 173 increases in temperature flowing through the gas turbine engine 118 between points 250 and 252 because of the residual heat from the high temperature of the gas turbine engine 118. The temperature of the ambient purge stream 173 may remain relatively flat upstream of the high-pressure section 162 between points 252 and 254 because there may be no significant sources of heat. As the ambient purge stream 173 passes across the high-pressure section 162, the temperature of the ambient purge stream 173 rises quickly between points 254 and 256. In other words, the components of the HRSG 138 between points 254 and 256 may rapidly cool, or quench, thereby transferring heat to the passing ambient purge stream 173. As the heat generated by the intermediate-pressure section 164 and the low-pressure section 166 is less than that generated by the high-pressure section 162, the temperature increase of the ambient purge stream 173 between points 256 and 260 is less than that between points 254 and 256. Thus, the quenching effect is concentrated between points 254 and 256, although additional quenching may also occur between points 256 and 260.

Turning next to the second curve 248, generated when using the waste heat exchanger 174, the temperature of the heated purge stream 144 entering the gas turbine engine 118 is greater because of the heat transferred to the heated purge stream 144 by the waste heat exchanger 174. The heated purge stream 144 may continue to increase in temperature between points 250 and 252 because of any residual heat from the gas turbine engine 118. As with the first curve 246, the temperature between points 252 and 254 may remain relatively constant. The temperature of the heated purge stream 144 passing across the high-pressure section 162 increases between points 254 and 256. However, because the temperature of the heated purge stream 144 is higher than that of the ambient purge stream 173, the temperature increase between points 254 and 256 is less than that shown between the same points for the first curve 246. In other words, the components of the HRSG 138 between points 254 and 256 experience less cooling. Thus, the quenching effect between points 254 and 256 is reduced when the waste heat exchanger 174 is used to purge the HRSG 138 with the heated purge stream 144. The temperature of the heated purge stream 144 may increase slightly between points 256 and 260 as shown in FIG. 7. As the increase in temperature between points 256 and 260 is small, the quenching effect may also be small. Thus, by using the waste heat exchanger 174 to heat the purge stream used to purge the HRSG 138, the overall quenching effect within the HRSG 138 may be greatly reduced compared to purging with the ambient purge stream 173. In addition, in certain embodiments, the reduction in the quenching effect achieved when using the waste heat exchanger 174 to generate the heated purge stream 144 may help maintain temperatures of metal surfaces within the HRSG 138 above the steam condensation temperature, as discussed above with respect to FIG. 3.

As described above, certain embodiments of the system 160 may be used to purge the HRSG 138 using the waste heat exchanger 174. The waste heat exchanger 174 may be used to transfer heat from hot sections of the HRSG 138 to the ambient purge stream 173 to generate the heated purge stream 144. The heated purge stream 144 may be transferred to the inlet section 168 of the HRSG 138 to purge the HRSG 138 of combustible gases and/or products of combustion. In certain embodiments, the blower 172 may be used to transfer the ambient purge stream 173 through the waste heat exchanger 174. In other embodiments, either the gas turbine engine 118 or the induced draft fan 200 may be used to transfer the heated purge stream 144 through the HRSG 138. In addition, certain embodiments may include the controller 182 to adjust the gas turbine engine 118, the blower 172, the induced draft fan 200, and/or other components of the system 160 to adjust a flow rate of the heated purge stream 144 through the HRSG 138 in response to signals 184 from sensors 186 disposed in the HRSG 138. Thus, the controller 182 may be used to control the purging of the HRSG 138. By increasing the temperature of the gas used to purge the HRSG 138, quenching effects of the HRSG 138 may be avoided. Thus, the life of the internal components of the HRSG 138 may be extended by using the waste heat exchanger 174. In addition, operating efficiency of the HRSG 138 may be improved by reducing startup times.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (160), comprising:
a heat recovery steam generator, HRSG (138);
a waste heat exchanger (174) coupled to the HRSG (138) and configured to transfer heat from the HRSG (138) to a purge stream (173) to generate a heated purge stream (144); and
a heated purge stream path (176) configured to transfer the heated purge stream (144) from the waste heat exchanger (174) to an inlet (168) of the HRSG (138).

2. The system (160) of claim 1, wherein the waste heat exchanger (174) is disposed downstream of a low-pressure section (166) of the HRSG (138).

3. The system (160) of either of claim 1 or 2, wherein the waste heat exchanger (174) is disposed in an exhaust stack (170) of the HRSG (178).

4. The system (160) of any preceding claim, wherein the heated purge stream path (176) is configured (180) to transfer the heated purge stream (144) from the waste heat exchanger (174) to a gas turbine engine (118) coupled to the inlet (168) of the HRSG (138).

5. The system (160) of any preceding claim, comprising a first damper (222) disposed in the inlet (168) of the HRSG (138) and a second damper (224) disposed in the inlet (168) of the HRSG (138), wherein the first damper is configured to control a first flow rate of the heated purge stream (144) and the second damper is configured to block the HRSG (138) from a gas turbine engine (118).

6. The system (160) of any preceding claim, comprising a gas turbine engine (118) coupled to the inlet (168) of the HRSG (138) and configured to transfer the heated purge stream (144) through the HRSG (138).

7. The system (160) of any preceding claim, comprising an induced draft fan (200) disposed downstream of a low-pressure section (166) of the HRSG (138) and configured to pull the heated purge stream (144) through the HRSG (138).

8. The system (160) of claim 7, comprising a damper (206) disposed upstream of the induced draft fan (200) and configured to block the induced draft fan (200) from the HRSG (138).

9. The system (160) of either of claim 7 or 8, comprising an induced draft stack (204) disposed downstream of the induced draft fan (200), wherein the waste heat exchanger (174) is disposed in the induced draft stack (204).

10. The system (160) of any preceding claim, wherein the waste heat exchanger (174) is configured to be reversibly coupled to the HRSG (138), wherein the waste heat exchanger (174) is reversibly inserted into the HRSG to generate the heated purge stream (144) and the waste heat exchanger (174) is reversibly removed from the HRSG (138) during normal operation of the HRSG (138).

11. The system (160) of claim 1, comprising:
a blower (172) coupled to the HRSG (138) and configured to transfer the purge stream to a waste heat exchanger (174), wherein the waste heat exchanger is disposed in the HRSG, and;
a controller (182) configured to adjust a flow rate of the heated purge stream (144) in response to feedback (184) from a sensor (186) disposed in the HRSG (138).

12. The system (160) of claim 11, wherein the heated purge stream path (176) is configured to mix the heated purge stream (144) with the purge stream (173).

13. The system (160) of either of claim 11 or 12, wherein the blower (172) is configured to transfer ambient air as the purge stream (173) to the waste heat exchanger (174).

14. The system (160) of any of claims 11 to 13, wherein the controller (182) is configured to adjust the flow rate of the heated purge stream (144) such that a temperature of the heated purge stream downstream of a low-pressure section (166) of the HRSG (138) is greater than a steam condensation temperature.

15. A method, comprising:
flowing a purge stream (173) through a waste heat exchanger (174) coupled to a heat recovery steam generator, HRSG (138);
transferring heat from the HRSG (138) to the purge stream (173) in the waste heat exchanger to generate a heated purge stream (144);
flowing the heated purge stream (144) to an inlet (168) of the HRSG (138) via a heated purge stream flow path (176); and
purging the HRSG (138) with the heated purge stream (144).
